(19)

Europäisches Patentamt
European Patent Office
Office européen des brevets

(11) **EP 0 944 193 B1**

(12) **EUROPEAN PATENT SPECIFICATION**

(45) Date of publication and mention
of the grant of the patent:
**30.12.2009 Bulletin 2009/53**

(51) Int Cl.:
*H04L 27/26* $^{(2006.01)}$    *H04L 25/02* $^{(2006.01)}$

(21) Application number: **99105271.3**

(22) Date of filing: **15.03.1999**

(54) **Receiver for the reception of digital broadcasts**

Empfänger für den Empfang von digitalen Rundfunkprogrammen

Récepteur pour la réception de programmes de radiodiffusion numérique

(84) Designated Contracting States:
**DE FR GB**

(30) Priority: **18.03.1998 JP 9082298**

(43) Date of publication of application:
**22.09.1999 Bulletin 1999/38**

(73) Proprietor: **Kabushiki Kaisha Kenwood
Hachiouji-shi,
Tokyo 192-8525 (JP)**

(72) Inventor: **Katsumoto, Hiroshi
Hachiouji-shi,
Tokyo 192-0045 (JP)**

(74) Representative: **Leinweber & Zimmermann
European Patent Attorneys
Patentanwälte
Rosental 7
80331 München (DE)**

(56) References cited:
**EP-A- 0 800 288    US-A- 5 617 411**

• "Radio broadcast systems; Digital Audio
Broadcasting (DAB) to mobile, portable and fixed
receivers" November 1994 (1994-11) ,
EUROPEAN TELECOMMUNICATION
STANDARD, NR. PR ETS 300401, PAGES 174-176
XP002246909

EP 0 944 193 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 0 944 193 B1**

**Description**

BACKGROUND OF THE INVENTION

1. Field of the Invention

The present invention relates to a digital broadcast receiver, and more particularly to a digital broadcast receiver for receiving a digital broadcast signal including transmitter identification information represented by transmission carriers combined in a NULL symbol in a start field of a transmission frame.

2. Description of the Related Art

In Europe, so-called digital audio broadcasting (DAB) is prevailing in practice. DAB uses orthogonal frequency division multiplex (OFDM) which is one kind of multicarrier modulation methods. Each transmission symbol is constituted of a guard interval and an effective symbol to thereby allow reception highly resistant to ghosts. Each carrier of DAB is DQPSK modulated.

DAB uses three bands: band II (87 to 108 MHz band), band III (175 to 250 MHz band), and L band (1.452 to 1.492 GHz band). The band II and III utilize a transmission mode 1 having a transmission frame period of 96 ms and a carrier interval of 1 kHz. The transmission mode 1 is highly resistant to multi-path and suitable for a single frequency network (SFN), and is limited to only for use with the bands II and III. The L band utilizes transmission modes 2, 3, and 4. The transmission mode 2 has a frame period of 24 ms and a carrier interval of 4 kHz and is suitable for mobil reception. The transmission mode 3 has a frame period of 24 ms and a carrier interval of 8 kHz and is suitable for satellite broadcast or the like. The transmission mode 4 has a frame period of 48 ms and a carrier interval of 2 kHz.

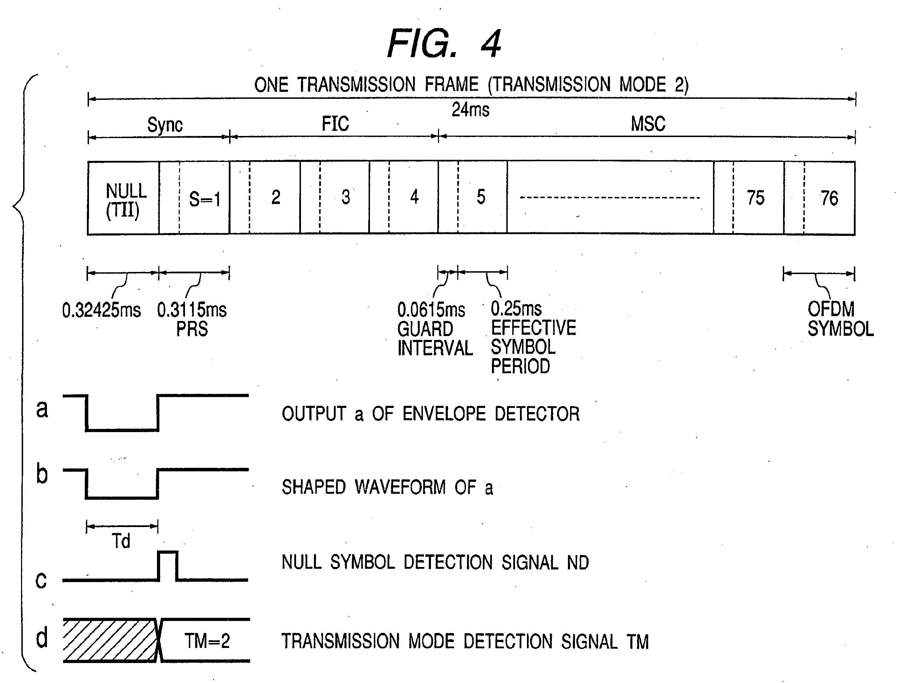

The format of a transmission frame signal in the transmission mode 2 of DAB is shown in the upper portion of Fig. 4. There are a sync signal constituted of a NULL symbol of 0.32425 ms and a phase reference symbol (PRS: Phase Reference Symbol) in the initial field, and seventy five OFDM symbols each of 0.3115 ms in the following fields. Symbols other than the NULL symbol are transmission symbols. A start period of 0.0615 ms of each transmission symbol constitutes a guard interval, and the remaining period of 0.25 ms constitutes an effective symbol.

The transmission symbol of S = 1 is PRS used for AFC (Automatic Frequency Control) or the like, PRS being obtained through adjacent inter-carrier differential modulation of a predetermined and specific code (called a CAZAC (Constant Amplitude Zero Auto Correlation) code). The transmission symbols of S = 2 to 4 are FIC's (Fast Information Channels) for transmission of information necessary for a receiver to tune in to a desired program, auxiliary information for a program, and the like. The transmission symbols of S = 5 to 76 are MSC's (Main Service Channels) for transmission of multiplexed sub-channels of voices and data. Generally, one sub-channel corresponds to one program. Information on how sub-channels are multiplexed in MSC is contained in FIC. Therefore, by referring to FIC, a sub-channel of a program desired by a user can be located.

In the transmission mode 1, each symbol period shown in Fig. 4 is elongated twofold. In the transmission mode 3, each symbol period shown in Fig. 4 is shortened by 1/8 and the number of OFDM symbols is increased. In the transmission mode 4, each symbol period shown in Fig. 4 is shortened by 1/2.

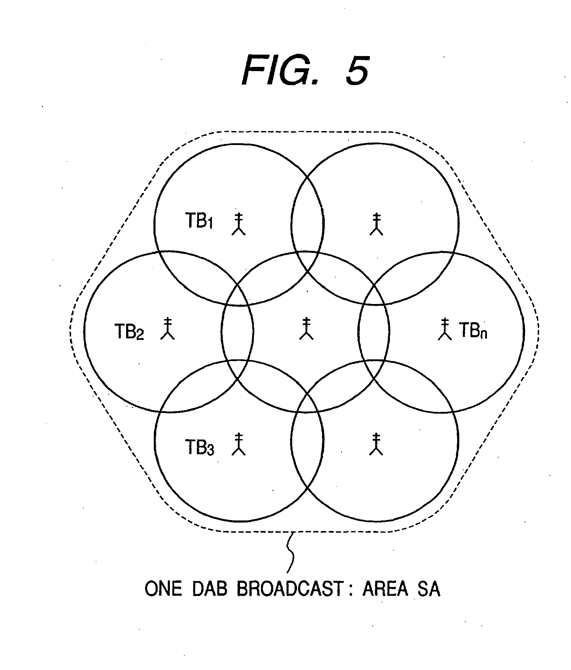

As shown in Fig. 5, if one arbitrary DAB broadcast area SA is covered with a plurality of transmitters $TB_1$ to $TB_n$, transmission by the transmitters $TB_1$ to $TB_n$ can be performed by using the same frequency (single frequency network (SFN) because DAB is highly resistant to multi-path interference. According to DAB, in order to identify a DAB broadcast area or to identify a transmitter $TB_i$ of a DAB broadcast under reception, a transmitter identification information signal called a TII (Transmitter Identification Information) signal is contained in the NULL symbol.

The transmitter identification information is constituted of a main ID for identifying a DAB broadcast area and a sub-ID for identifying each transmitter $TB_1$ to $TB_n$ under DAB broadcasting. If the main ID and sub-ID are known, the reception side can know an approximate present location. Some carriers constituting OFDM and included in the NULL symbol are transmitted. The transmitter identification signal is constituted of a combination of transmission carriers.

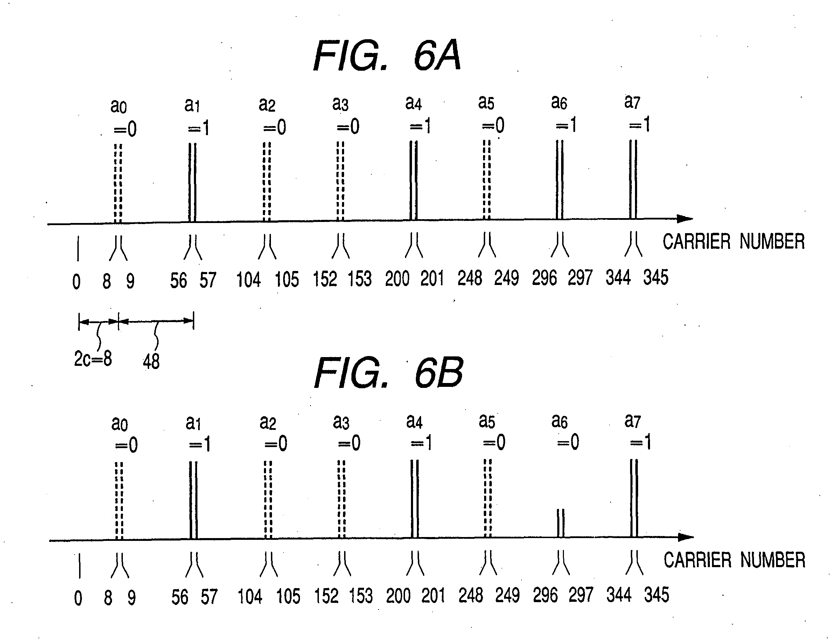

The transmitter identification signal will be described by taking as an example the transmission mode 2 (the number of carriers is 384 and the frame period is 24 ms) (refer to Figs. 6A and 6B). The carriers of the transmission mode 2 are assigned carrier numbers 0 to 383 in the order of lower frequency. A pair of carriers having carrier numbers $2c$ and $(2c + 1)$ is represented by $A_0$, a pair of carriers having carrier numbers $(2c + 48 \times 1)$ and $(2c + 48 \times 1 + 1)$ is represented by $A_1$, a pair of carriers having carrier numbers $(2c + 48 \times 2)$ and $(2c + 48 \times 2 + 1)$ is represented by $A_2$, a pair of carriers having carrier numbers $(2c + 48 \times 3)$ and $(2c + 48 \times 3 + 1)$ is represented by $A_3$, a pair of carriers having carrier numbers $(2c + 48 \times 4)$ and $(2c + 48 \times 4 + 1)$ is represented by $A_4$, a pair of carriers having carrier numbers $(2c + 48 \times 5)$ and $(2c + 48 \times 5 + 1)$ is represented by $A_5$, a pair of carriers having carrier numbers $(2c + 48 \times 6)$ and $(2c + 48 \times 6 + 1)$ is represented by $A_6$, and a pair of carriers having carrier numbers $(2c + 48 \times 7)$ and $(2c + 48 \times 7 + 1)$ is represented by $A_7$, where $\underline{c}$ is the sub-ID and $0 \leq c \leq 23$. The main ID is represented by a bit pattern ($a_0$ $a_1$ $a_2$ $a_3$ $a_4$ $a_5$

$a_6$ $a_7$), where the bit data $a_0$ to $a_7$ corresponds to the carrier pairs $A_0$ to $A_7$, the bit data corresponding to the carrier pair actually transmitted is "1", and the bit data corresponding to the carrier pair not transmitted is "0".

In Fig. 6A, solid lines indicate carrier pairs actually transmitted where ($a_0$ $a_1$ $a_2$ $a_3$ $a_4$ $a_5$ $a_6$ $a_7$) = (0 1 0 0 1 0 1 1). In the transmission mode 2, the reception side detects a carrier-dependent level (amplitude, power, and the like) from the NULL symbol, and judges that a carrier pair having a level in excess of a predetermined level is a transmitted carrier pair. The sub-ID can be analyzed from the carrier numbers (frequencies) of the transmission carrier pairs. In the example shown in Fig. 6A, the carrier numbers are 56, 57, 200, 201, 296, 297, 344, and 345 and $\underline{c}$ is 4.

The carrier numbers (frequencies) of the carrier pairs having a possibility of being transmitted as the TII signal are decided from the transmission mode and $\underline{c}$. In the example shown in Fig. 6A, the carrier numbers are decided as 8, 9, 56, 57, 104, 105, 152, 153, 200, 201, 248, 249, 296, 297, 344, and 345. The main ID can be decoded by analyzing the carrier numbers (frequencies) of the carrier pairs actually transmitted (in the example shown in Fig. 6A, the carrier numbers are 56, 57, 200, 201, 296, 297, and 344) and the carrier numbers (frequencies) of the carrier pairs not transmitted (in the example shown in Fig. 6A, the carrier numbers are 8, 9, 104, 105, 152, 153, 248, and 249. In the example shown in Fig. 6A, the main ID is ($a_0$ $a_1$ $a_2$ $a_3$ $a_4$ $a_5$ $a_6$ $a_7$) = (0 1 0 0 1 0 1 1). The above description is also applicable to the other transmission modes.

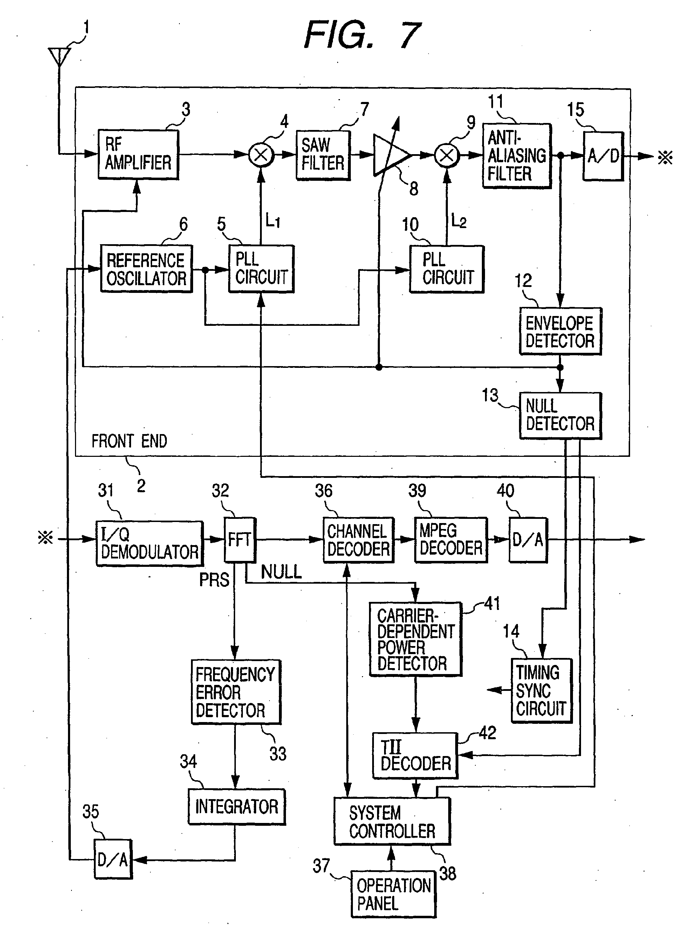

Fig. 7 is a block diagram of a DAB receiver.

A DAB broadcast signal (also called ensemble) of, for example, in the L band of the transmission mode 2, caught with an antenna 1 is sent to a front end 2, RF-amplified by an RF amplifier 3 capable of changing its gain with an AGC voltage, and mixed at a mixer with a first local oscillation signal $L_1$ input from a PLL circuit 5 to be converted into a first intermediate frequency signal having a center frequency of $f_{IF1}$. The signal $L_1$ output from the PLL circuit 5 has a frequency of $f_1 \cdot (n_1/m_1)$, where $f_1$ is a frequency of a reference oscillation signal input from a reference oscillator 6, $m_1$ takes a fixed value, and $n_1$ takes a value which is changed by a system controller made of a microcomputer to be described later, $n_1$ being used for changing the tuned frequency at a step of 16 kHz. The reference oscillator 6 is a VCXO which changes its oscillation frequency in accordance with an automatic frequency adjusting control voltage. The first intermediate frequency signal is supplied to a SAW filter (elastic surface wave filter) 7 to limit a pass-band to 1.536 MHz.

An output of the SAW filter 7 is supplied via an AGC amplifier 8 to a mixer 9 whereat it is mixed with a second local oscillation signal $L_2$ input from a PLL circuit 10 to be converted into a second intermediate frequency signal having a center frequency of $f_{IF2}$ ($< f_{IF1}$). The signal $L_2$ output from the PLL circuit 10 has a frequency of $f_1 \cdot (n_2/m_2)$, where $f_1$ is a frequency of a reference oscillation signal input from the reference oscillator 6, and both $m_2$ and $n_2$ take fixed values. The second intermediate frequency signal is supplied to an anti-aliasing filter 11 to limit a pass-band to 1.536 MHz.

An envelope of the second intermediate frequency signal output from the anti-aliasing filter 11 is detected by an envelope detector 12 and output as the AGC voltage to the RF amplifier 3 and AGC circuit 8 (refer to $\underline{a}$ in Fig. 4). The RF amplifier 3 and AGC circuit 8 lower or increase their gains in accordance with the AGC voltage so that the second intermediate frequency signal having generally a constant level independent from the antenna input level can be obtained. An output of the envelope detector 12 is input to a NULL detector 13 to detect a NULL symbol. The NULL detector 13 shapes the waveform of the NULL symbol (refer to $\underline{b}$ in Fig. 4), and measures a low level time Td. If this low level time is coincident with a NULL symbol length of any transmission mode defined by DAB, the NULL detector 13 outputs a NULL symbol detection signal ND (refer to $\underline{c}$ in Fig. 4) to a timing sync circuit 14 and the like, synchronously with the rise timing of the envelope signal. The NULL detector 13 also outputs a transmission mode detection signal TM (refer to $\underline{d}$ in Fig. 4. It is assumed that Td = 1.297 ms so that the transmission mode detection signal TM indicates the transmission mode 2).

The timing sync circuit 14 generates various timing signals during an ordinary operation, by receiving carrier-components in PRS (effective symbol period) input from an FFT circuit to be described later, calculating a carrier-power, detecting a frame sync from a cepstrum obtained through IFFT of the carrier-dependent power, and outputting this sync detection signal to an unrepresented timing signal generator. However, immediately after the start of ensemble reception, the timing sync circuit 14 detects the frame sync by using the NULL symbol detection signal ND input from the NULL detector, and outputs a sync detection signal.

An output of the anti-aliasing filter 11 is A/D converted by an A/D converter 15. An I/Q demodulator 31 demodulates I/Q components to recover the transmission frame signal shown in Fig. 4. The demodulated I/Q components are subject to a FFT process by an FFT circuit 32 constituted of a dedicated processor to thereby derive carrier-components (complex number data representative of an amplitude and phase of each carrier) of each of $\underline{n}$ carriers constituting an OFDM modulated wave, in the unit of symbol, where n = 384 for the transmission mode 2. The FFT circuit 32 outputs the carrier-dependent components during the effective symbol period of PRS to a frequency error detector 33 in response to predetermined timing signals. The frequency error detector 33 decodes the carrier-dependent components of PRS through inter-carrier differential demodulation (for PRS, a predetermined fixed code was subject to the inter-carrier differential modulation on the transmission side), and thereafter calculates a correlation function between the decoded carrier-dependent components and a predetermined reference code. A frequency error of the tuned frequency from the DAB broadcast signal is calculated from this correlation function, and output to an integrator 34. Data integrated by the integrator 34 is D/A converted by a D/A converter 35 and output to the reference oscillator 6 as the automatic frequency adjusting control voltage. In accordance with this control voltage, the reference oscillator 6 changes its oscillation frequency to thereby change the reference oscillation signal frequency $f_1$ and cancel the frequency error.

The FFT circuit 32 outputs FFT carrier-dependent components (complex number data representative of an amplitude and phase of each carrier) of each symbol (effective symbol period) of S = 2 to 76 shown in Fig. 4 to a channel decoder 36. The channel decoder 36 performs frequency deinterleaving, DQPSK symbol demapping, and FIC/MSC separation, and outputs packet data called an FIG (Fast Information Group) to the system controller, the FIG including twelve FIB's (Fast Information Blocks) obtained through error detection/correction (Viterbi decoding) and descrambling of three effective FIC symbols each divided into four.

MSC effective symbols are classified into eighteen symbols to reconfigure four CIF's (Common Interleaved Frames). Each CIF contains a plurality of sub-channels each corresponding to one program.

When a user selects a desired program by using a program select key of an operation panel 37, the system controller 38 performs a predetermined program selection control, and outputs information of designating a sub-channel corresponding to the desired program, by referring to FIC information. The channel decoder 36 derives the sub-channel designated by the system controller 38 from four CIF's, and thereafter performs time deinterleaving, error detection/correction (Viterbi decoding), error count, and descrambling to decode the DAB audio frame data and output it to a MPEG decoder 39.

The MPEG decoder 39 decodes the DAB audio frame data and outputs audio data of two channels. This audio data is D/A converted by a D/A converter 40 and output as an analog audio signal.

When a user selects a desired ensemble by using a program selection key of the operation panel 37, the system controller 38 sets the value $n_1$ corresponding to the broadcast frequency of the desired ensemble to the PLL circuit 5 to thereby make the front end 2 tune in to the ensemble desired by the user.

During reception of an ensemble, the FFT circuit outputs the carrier-components in the NULL symbol to a carrier-power detector 41, synchronously with a timing signal supplied from an unrepresented timing signal generator. The carrier-independent power detector 41 detects a carrier-independent level by calculating a carrier-independent power by using the carrier-components in the NULL symbol, and outputs the detected carrier-independent level to a TII decoder 42. Upon reception of the carrier-independent level in the NULL symbol, the TII decoder 42 judges that a carrier pair having a level higher than a predetermined value is a transmitted carrier. In accordance with the TII rule of the transmission mode (in this example, mode 2) detected by the NULL detector 13, the TII decoder 42 analyzes the sub-ID (in the example shown in Fig. 6A, c = 4) from the carrier numbers of the transmission carriers, and the main ID from the carrier numbers of carriers actually transmitted (in the example shown in Fig. 6A, the carrier numbers are 56, 57, 200, 201, 296, 297, and 344) and the carrier numbers of carriers not transmitted (in the example shown in Fig. 6A, the carrier numbers are 8, 9, 104, 105, 152, 153, 248, and 249, among those carriers numbers decided by the transmission mode and sub-ID as having a possibility of being transmitted (in the example shown in Fig. 6A, the carrier numbers are 8, 9, 56, 57, 104, 105, 152, 153, 200, 201, 248, 249, 296, 297, 344, and 345. In the example shown in Fig. 6A, the main ID is a pattern number represented by a bit pattern of $(a_0\ a_1\ a_2\ a_3\ a_4\ a_s\ a_6\ a_7)$ = (0 1 0 0 1 0 1 1).

The TII decoder 42 outputs the decoded main ID and sub-ID to the system controller 38 which displays the ID's on an unrepresented display panel and performs other necessary operations.

Whether each carrier in the NULL symbol is a transmitted carrier or a carrier not transmitted, is determined from the amplitude of the transmission carrier in the NULL symbol.

The amplitude of a transmitted carrier in the NULL symbol becomes too small if a fading phenomenon or the like makes a dip in the frequency-amplitude characteristics of a spatial transmission path from a transmitter to a receiver and the transmitted carrier enters this dip, particularly during a low speed motion or halt of the receiver. In such a case, the transmitted carrier may be erroneously judged as the carrier not transmitted so that the TII signal can be analyzed correctly.

More specifically, if a dip is formed in the frequency-amplitude characteristics of the spatial transmission path near at the carrier frequencies of the carrier numbers 296 and 297 of the TII signal transmitted in the transmission mode 2 from a transmitter as shown in Fig. 6A, then the levels of the carriers of the carrier numbers 296 and 297 received at a receiver becomes lower than the other transmission carriers as shown in Fig. 6B and the bit data $a_6$ is erroneously recognized as "0".

If the characteristics of the SAW filter 7 of the front end 2 of a DAB receiver have some variation, the edges of the cut-off frequencies of the SAW filter 7 enter the band of a reception signal, the carriers of the reception signal at the edges of the reception signal band are attenuated while they pass through the front end 2. Therefore, the level of corresponding transmission carriers constituting the TII signal in the NULL symbol lowers so that the transmitted carrier is erroneously judged as a carrier not transmitted and the TII signal cannot be correctly analyzed.

SUMMARY OF THE INVENTION

Against this background, the object of the present invention is thus to suppress an erroneous reception of the transmitter identification information while the reception state becomes poor.

This object is achieved by the receiver of claim 1. Further refinements are defined in dependent claims 2 and 3.

BRIEF DESCRIPTION OF THE DRAWINGS

Fig. 1 is a block diagram of a DAB receiver according to an embodiment of the invention.
Figs. 2A and 2B are diagrams illustrating the operation of a correction circuit shown in Fig. 1.
Fig. 3 is a diagram showing carrier-dependent power values of PRS.
Fig. 4 is a diagram illustrating the format of a DAB transmission frame signal and an operation of detecting a NULL symbol.
Fig. 5 is a diagram illustrating a single frequency network (SFN).
Figs. 6A and 6B are frequency diagrams of transmission carrier pairs constituting transmitter identification information.
Fig. 7 is a block diagramm of a conventional DAB receiver.

DETAILED DESCRIPTION OF THE PREFERRED EMBODIMENTS

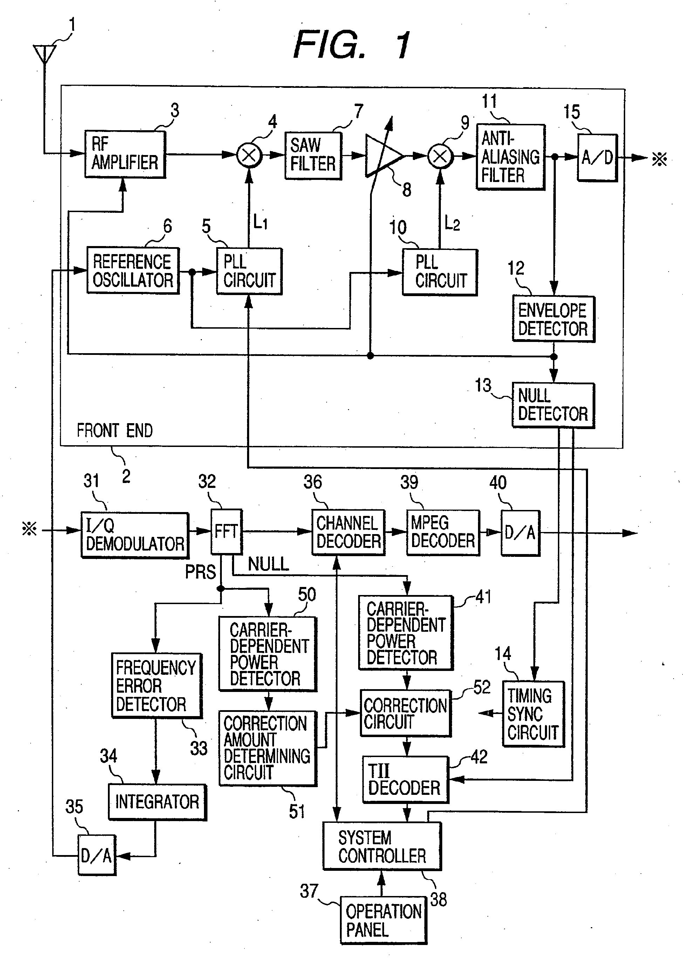

An embodiment of the invention will be described with reference to Fig. 1.

Fig. 1 is a block diagram of a DAB receiver according to the invention. In Fig. 1, like elements to those shown in Fig. 7 are represented by using identical reference numerals.

The level of each transmission carrier in the NULL symbol may fluctuate if the frequency-amplitude characteristics of a transmission path from a transmitter to an output side of a front end 2 is not flat. For example, if a dip is formed by a fading phenomenon or the like in the frequency-amplitude characteristics of the spatial transmission path from a transmitter to a receiver, some carriers constituting an ensemble or DAB broadcast signal may be attenuated, or if the characteristics of a band-limiting SAW filter 7 of the front end 2 of a receiver have some variation, the edges of the cut-off frequencies of the SAW filter 7 enter the band of a reception signal, the carriers of the reception signal at the edges of the reception signal band are attenuated while they pass through the front end 2.

Of the transmission frame signal of OFDM modulated wave, all carriers of the symbol other than the NULL symbol are transmitted at the same amplitude. The NULL symbol and the next PRS are adjacent in time. It can therefore be presumed that the frequency-amplitude characteristics of a transmission path from a transmitter to the output side of the front end are almost the same for both the NULL symbol and PRS. In other words, if some carrier constituting the TII signal in the NULL symbol is attenuated, the carrier in PRS having the same frequency is also attenuated.

In the DAB receiver shown in Fig. 1, a ratio of the level of each carrier in PRS to the average level of all carriers is obtained to correct the level of each carrier in the NULL symbol having the same frequency as that of the carrier in PRS. In this manner, the influence of the frequency-amplitude characteristics of the transmission path upon each carrier in the NULL symbol is compensated for.

More specifically, the carrier-dependent components (complex number data of each carrier representative of phase and amplitude) of PRS output from the FFT circuit 32 is supplied to a carrier-dependent power detector 50 which calculates a carrier-dependent power value as a carrier-dependent level. The carrier-dependent power value of PRS is input to a correction amount determining circuit 51. The correction amount determining circuit 51 calculates a ratio of the power of each carrier in PRS to the average power of all carriers, in accordance with the supplied carrier-dependent power value of PRS, and determines the level correction amount of each carrier in the NULL symbol.

The carrier-dependent components of the NULL symbol output from the FFT circuit 32 is supplied to a carrier-dependent power detector 41 which calculates a carrier-dependent power value as a carrier-dependent level. The carrier-dependent power value is input to a correction circuit 52. The correction circuit 52 stores the carrier-dependent power value in its memory (not shown) and waits for a supply of the level correction amount obtained from PRS immediately after the NULL symbol in the same transmission frame. When the correction amount determining circuit 51 determines the level correction amount of each carrier from the carrier-dependent power value of PRS immediately after the NULL symbol and outputs it, the correction circuit 52 corrects the power value of each carrier of the NULL symbol by using the corresponding level correction amount, to thereby cancel the level change caused by the frequency-amplitude characteristics of the transmission path from the transmitter to the output side of the front end 2.

The carrier-dependent power value of the NULL symbol corrected by the correction circuit is input to a TII decoder 42. Upon reception of the carrier-dependent power value of the NULL symbol, the TII decoder 42 judges that paired two carriers both having a level higher than a predetermined value are the paired transmission carriers actually transmitted. In accordance with the rule of TII in the transmission mode detected by the NULL detector 13, the sub-ID is decoded from the frequency positions of paired transmission carriers. Of the carriers having a possibility of being transmitted as the main ID which are decided in advance from the transmission mode and the sub-ID, the frequency positions of carriers actually transmitted and the frequency positions of carriers not transmitted are used for decoding the main ID. The sub-ID and main ID are supplied to the system controller 38.

Other structures of the DAB receiver are quite the same as those shown in Fig. 7.

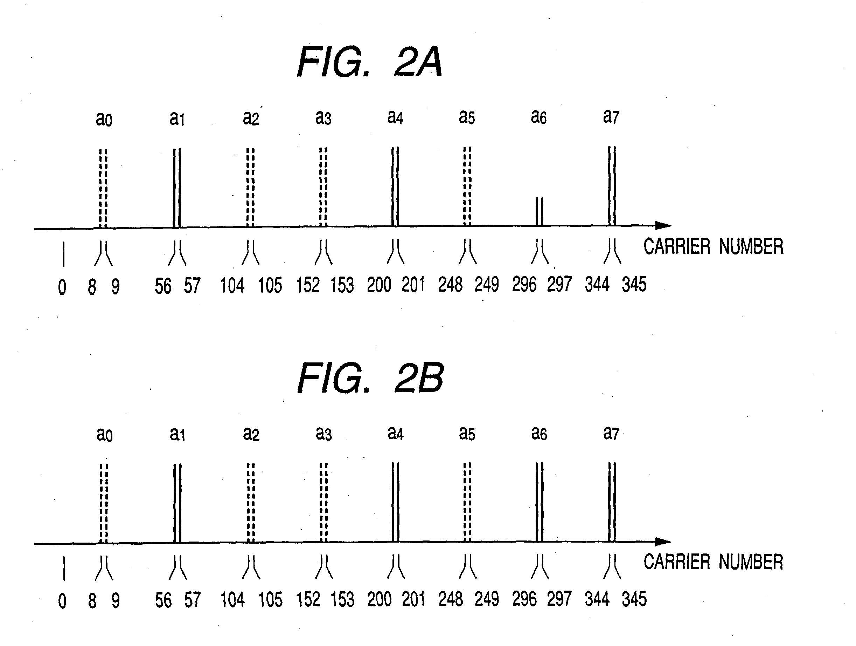

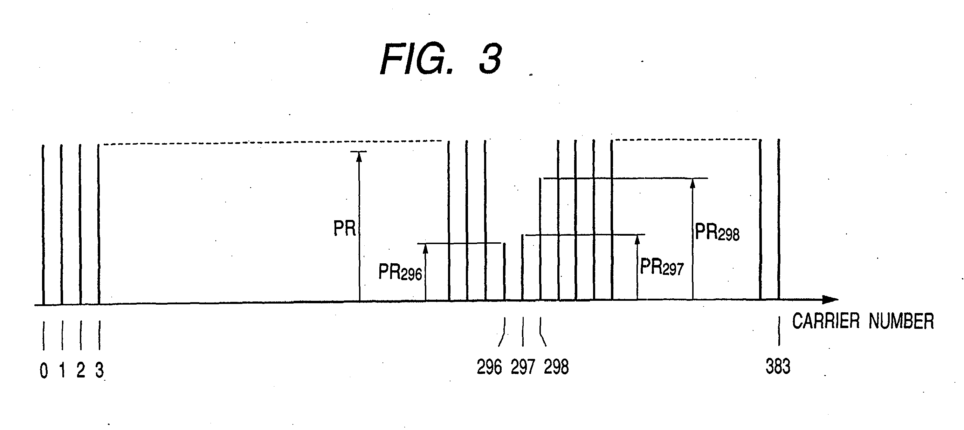

A reception operation of the embodiment described above will be described with reference to Figs. 2A and 2B and Fig. 3. Figs. 2A and 2B are diagrams illustrating a comparison between the carrier-dependent power values of the NULL symbol input to the correction circuit 52 and the carrier-dependent power values of the NULL symbol output from the correction circuit 52.

It is assumed herein from the convenience of description that an ensemble or DAB broadcast signal of the L band in the transmission mode 2 is received with the DAB receiver.

(1) Voice Reception

A DAB broadcast signal caught with an antenna 1 is sent to the front end 2, and after amplification, frequency conversion, and band limitation, it is converted into a second intermediate frequency signal having a center frequency $f_{IF2}$ which is A/D converted and output. An envelope of the second intermediate frequency signal is detected by an envelope detector 12 and output as the AGC voltage to the RF amplifier 3 and AGC circuit 8 (refer to a in Fig. 4). The NULL detector 13 shapes the waveform of the AGC voltage. (refer to b in Fig. 4), and measures a low level time Td. If this low level time is coincident with a NULL symbol length of any transmission mode defined by DAB, the NULL detector 13 outputs a NULL symbol detection signal ND (refer to c in Fig. 4) to a timing sync circuit 14 and the like, synchronously with the rise timing of the envelope signal. The NULL detector 13 also outputs a transmission mode detection signal TM (refer to d in Fig. 4. It is assumed that TM = 2). The timing sync circuit 14 detects a frame sync signal by using the NULL symbol detection signal ND and outputs a sync detection signal so that an unrepresented timing signal generator generates various timing signals.

An I/Q demodulator 31 demodulates I/Q components from an output of the front end 2 to recover the transmission frame signal shown in Fig. 4. The demodulated I/Q components are subject to a FFT process by an FFT circuit 32 to thereby derive carrier-dependent components (complex number data representative of an amplitude and phase of each carrier) of each of n carriers constituting an OFDM modulated wave, in the unit of symbol, where n = 384 for the transmission mode 2. The FFT circuit 32 outputs the carrier-dependent components during the effective symbol period of PRS to a frequency error detector 33 in response to predetermined timing signals. The frequency error detector 33 decodes the carrier-dependent components of PRS through inter-carrier differential demodulation (for PRS, a predetermined fixed code was subject to the inter-carrier differential modulation on the transmission side), and thereafter calculates a correlation function between the decoded carrier-dependent components and a predetermined reference code. A frequency error of the tuned frequency from the DAB broadcast signal is calculated from this correlation function, and output to an integrator 34. Data integrated by the integrator 34 is D/A converted by a D/A converter 35 and output to the reference oscillator 6 as the automatic frequency adjusting control voltage. In accordance with this control voltage, the reference oscillator 6 changes its oscillation frequency to thereby change the reference oscillation signal frequency $f_1$ and cancel the frequency error.

The FFT circuit 32 outputs FFT carrier-dependent components (complex number data representative of an amplitude and phase of each carrier) of each symbol (effective symbol period) of S = 2 to 76 shown in Fig. 4 to a channel decoder 36. The channel decoder 36 performs frequency deinterleaving, DQPSK symbol demapping, and FIC/MSC separation, and outputs packet data called an FIG (Fast Information Group) to the system controller, the FIG including twelve FIB's (Fast Information Blocks) obtained through error detection/correction (Viterbi decoding) and descrambling of three effective FIC symbols each divided into four.

MSC effective symbols are classified into eighteen symbols to reconfigure four CIF's (Common Interleaved Frames). Each CIF contains a plurality of sub-channels each corresponding to one program.

When a user selects a desired program by using a program select key of an operation panel 37, the system controller 38 performs a predetermined program selection control, and outputs information of designating a sub-channel corresponding to the desired program, by referring to FIC information. The channel decoder 36 derives the sub-channel designated by the system controller 38 from four CIF's, and thereafter performs time deinterleaving, error detection/correction (Viterbi decoding), error count, and descrambling to decode the DAB audio frame data and output it to a MPEG decoder 39.

The MPEG decoder 39 decodes the DAB audio frame data and outputs audio data of two channels. This audio data is D/A converted by a D/A converter 40 and output as an analog audio signal.

(2) Reception of TII signal

In the DAB broadcasting, some carriers in the NULL symbol are transmitted and the transmitter identification information (TII) signal is transmitted in accordance with the frequency positions of the carriers.

During a reception of a DAB broadcast signal, the carrier-dependent components of the NULL symbol output from the FFT circuit 32 are input to the carrier-dependent power detector 41. The carrier-dependent level is detected by calculating the carrier-dependent power value. The number $n$ of carriers in the transmission mode is 384. The carrier numbers i = 0 to 383 are assigned to the carriers in the order of low frequency. The power value of the carrier with the carrier number $i$ in the NULL symbol is represented by $PN_i$.

The amplitude of each transmission carrier constituting the TII signal is the same. Whether each carrier in the NULL symbol is a transmitted carrier or a carrier not transmitted, is determined from the amplitude of the transmission carrier. The amplitude of a transmitted carrier in the NULL symbol becomes too small if a fading phenomenon or the like makes a dip in the frequency-amplitude characteristics of a spatial transmission path from a transmitter to a receiver and the transmitted carrier enters this dip, particularly during a low speed motion or halt of the receiver. In such a case, the transmitted carrier may be erroneously judged as the carrier not transmitted.

If the characteristics of the SAW filter 7 of the front end 2 of the DAB receiver have some variation, the edges of the cut-off frequencies of the SAW filter 7 enter the band of a reception signal, and the carriers of the reception signal at the edges of the reception signal band are attenuated while they pass through the front end 2. Therefore, the levels of corresponding transmission carriers constituting the TII signal in the NULL symbol lower so that the transmitted carrier is erroneously judged as a carrier not transmitted and the TII signal cannot be correctly analyzed.

For example, even if the TII signal is transmitted at the transmission side under the flat frequency-amplitude characteristics such as shown in Fig. 6A, the frequency-amplitude characteristics from the transmitter to the output side of the front end 2 may change the levels of carriers having the carrier numbers 296 and 297 received at a receiver lower than the levels of the other carriers such as shown in Fig. 2A. In this case, the bit data $a_6$ is erroneously set to "0".

In this embodiment, the TII signal is analyzed after the correction circuit 52 corrects the level of each carrier of the NULL symbol. Specifically, the carrier-dependent power value $PN_i$ (i = 0 to 383) is input to the correction circuit 52 and is temporarily stored in its memory (not shown). It is assumed herein that $PN_{56} = PN_{57} = PN_{200} = PN_{201} = PN_{344} = PN_{345} = P_M$ and $PN_{296} < PN_{297} < P_M$.

The FFT circuit 32 supplies the carrier-dependent power detector 50 with the carrier-dependent components (complex number data of each carrier representative of phase and amplitude) of PRS following the NULL symbol inclusive of the TII signal. The carrier-dependent power detector 50 calculates the carrier-dependent power value $PR_i$ (i = 0 to 383) and supplies it to the correction amount determining circuit 51.

It is assumed herein that the levels of carriers having the carrier numbers 296 to 298 become lower than the other transmission carriers as shown in Fig. 3 because of the influence of the frequency-amplitude characteristics of the transmission path from a transmitter to the output side of the front end 2, and that $PR_0 = PR_1 = ... = PR_{295} = PR_{299} = ... = PR_{383} = P_v$ and $PR_{296} < PR_{297} < PR_{298} < P_v$.

The correction amount determining circuit 51 calculates a ratio $K_i = PR_i/PR$ (i = 0 to 383) of the power $PR_i$ of each carrier in PRS to the average power PR (= $(PR_0 + PR_1 + ... + PR_{383})$ /384) of all carriers, in accordance with the supplied carrier-dependent power value of PRS, and determines the level correction amount $K_i$ of each carrier in the NULL symbol to thereafter output it to the correction circuit 52.

In accordance with the carrier-dependent power value $PT_i$ in the NULL symbol previously stored in the memory of the correction circuit 52 and the level correction amount $K_i$ obtained from PRS of the same transmission frame and input from the correction amount determining circuit 51, the correction circuit 52 calculates $PT_i' = PT_i/K_i$ and corrects the level of each carrier to thereafter output it to the TII decoder 42. $PT_i$, $PR_i$, $K_i$, and $PT_i'$ for the same $i$ corresponds to the carrier having the same frequency.

Since the NULL symbol and PRS in the same transmission frame signal is adjacent in time so that it can be presumed that the frequency-amplitude characteristics of the transmission path from the transmitter to the output side of the front end 2 are the same for both the NULL symbol and PRS. Therefore, the correction amount determining circuit 41 and correction circuit 42 can correct all the carrier-dependent power values of the NULL symbol to have the same value.

The carrier-dependent power value $PT_i'$ (i = 0 to 383) of the NULL symbol corrected by the correction circuit 52 has therefore generally the same value $P_M'$ as shown in Fig. 2B. Upon reception of the carrier-dependent power value $PT_i'$ of the NULL symbol, the TII decoder 42 judges that paired two carriers both having a level higher than the predetermined level are a pair of carriers actually transmitted. In this case, since the power values of the carriers having the carrier numbers 296 and 297 were already corrected, these carriers are judged as a pair of carriers actually transmitted. In addition to the paired carriers having the carrier numbers 296 and 297, pairs of carriers having the carrier numbers 56 and 57, 200 and 201, 296 and 297, and 344 and 345 are also judged as the pairs of carriers actually transmitted. In accordance with the rule of TII of the transmission mode (in this example, mode 2) detected by the NULL detector 13, the sub-ID is decoded from the frequency positions of transmission carrier pairs. In the case of Fig. 2B, the sub-ID $c$ is 4.

Of the carriers having carrier numbers 8 and 9, 56 and 57, 104 and 105, 152 and 153, 200 and 201, 248 and 249, 296 and 297, and 344 and 345 which have a possibility of being transmitted as the main ID and are decided from the transmission mode and the sub-ID = 4, the carrier numbers 56 and 57, 200 and 201, 296 and 297, and 344 and 345 of carriers actually transmitted and the carrier numbers 8 and 9, 104 and 105, and 248 and 249 of carriers not transmitted are used for decoding the main ID. In the example shown in Fig. 2B, the main ID has a bit pattern of ($a_0$ $a_1$ $a_2$ $a_3$ $a_4$ $a_5$ $a_6$ $a_7$) = (0 1 0 0 1 0 1 1). The pattern number of this bit pattern is "16" according to the specification of DAB. The main ID of "16" is thus obtained.

The sub-ID and main ID decoded by the TII decoder 42 are supplied to the system controller 38 which displays them on an unrepresented display panel.

In this embodiment, the carrier-dependent power detector 50 provided on the output side of the FFT circuit 32 detects a carrier-dependent power of PRS, and the correction amount determining circuit 51 calculates a ratio of the level of each carrier to the average level of all carriers, and determines a level correction amount of each carrier of the NULL symbol. In accordance with the level correction amount supplied from the correction amount determining circuit 51, the correction circuit 52 corrects the carrier-dependent power value of each carrier of the NULL symbol detected by the carrier-dependent power detector 50, and outputs the corrected carrier-dependent power value to the TII decoder 42.

The frequency-amplitude characteristics relative to the symbol in a predetermined range immediately before or after the NULL symbol can be presumed to have generally the same frequency-amplitude characteristics relative to the NULL symbol from the viewpoint of time. Some carriers constituting the ensemble or DAB broadcast signal may be attenuated by a dip formed by the fading phenomenon or the like in the frequency-amplitude characteristics of the spatial transmission path from a transmitter to a DAB receiver, or carriers at edges of a reception signal bandwidth may be attenuated while the reception signal passes through the front end 2, because of a variation of the characteristics of the SAW filter 7. All carriers in the OFDM symbol other than the NULL symbol are transmitted at the same amplitude. Therefore, in calculating the ratio of the level of each carrier to the average level of all carriers, if the carrier-dependent components of the symbol immediately before or after the NULL symbol are used, then a correct correction amount for correcting the level change of each carrier of the NULI symbol can be obtained.

The TII decoder 42 judges a transmitted carrier in accordance with a carrier-dependent power value of the NULL symbol after the level correction, and decodes the TII signal. Therefore, even if some carriers constituting the reception signal at the output side of the front end are attenuated because of the frequency-amplitude characteristics of the transmission path from a transmitter to the output side of the front end, the TII decode 42 can correctly judge the transmission carrier and decode the sub-ID and main ID.

Furthermore, even if edges of cut-off frequencies enter a reception signal bandwidth because of a variation of the characteristics of the SAW filter 7 and carriers at the edges of the bandwidth are attenuated, the TII signal can be received correctly. Therefore, the requirements for the characteristics of the SAW filter 7 are not necessary to be severe, but components low in cost can be used.

In the above embodiment, although the transmission mode 2 is used by way of example, the other transmission modes may also be applied.

In the above embodiment, the level correction amount for each carrier of the NULL symbol is determined in accordance with the level of each carrier of PRS immediately after the NULL symbol of the same transmission frame. The level correction amount for each carrier of the NULL symbol may be determined by a different method as in the following. It can be presumed that the OFDM symbol of S = 2 shown in Fig. 4 after the NULL symbol of the same transmission frame has generally the same carriers as those of the NULL symbol from the viewpoint of time. Accordingly, the FFT circuit 32 outputs the carrier-dependent components of the effective symbol of the OFDM symbol of S = 2, a correction amount determining means having a similar structure to that of the carrier-dependent power detector 50 and correction amount determining circuit 51 shown in Fig. 1 determines the level correction amount for each carrier of the NULL symbol, and a correcting means having a similar structure to that of the correction circuit 52 shown in Fig. 1 corrects the level of each carrier of the NULL symbol.

Similarly, it can be presumed that the OFDM symbol of S = 75 or 76 shown in Fig. 4 before the NULL symbol of the succeeding transmission frame has generally the same carriers as those of the NULL symbol from the viewpoint of time. Accordingly, the FFT circuit 32 outputs the carrier-dependent components of the effective symbol of the OFDM symbol of S = 75 or 76, a correction amount determining means having a similar structure to that of the carrier-dependent power detector 50 and correction amount determining circuit 51 shown in Fig. 1 determines the level correction amount for each carrier of the NULL symbol, and a correcting means having a similar structure to that of the correction circuit 52 shown in Fig. 1 corrects the level of each carrier of the NULL symbol.

The carrier-dependent components of predetermined symbols in a predetermined range immediately before or after the NULL symbol output from the FFT circuit 32 may be used. In this case, the correction amount determining means calculates a ratio of the average level of carriers of the predetermined symbols immediately before and after the NULL symbol to the average level of all carriers of the two transmission frames immediately before and after the NULL symbol, and determines the level correction amount for each carrier of the NULL symbol. In accordance with the level correction amount, the correcting means corrects the level of each carrier of the NULL symbol. In this manner, a correction error can be made smaller and the transmitter identification information can be decoded more correctly.

For example, in the case of the transmission mode 2 of the L band, a carrier-dependent power value $PR_i$ of PRS immediately after the NULL symbol and a carrier-dependent power value $PO_i$ of an OFDM symbol one symbol before the NULL symbol are used to calculate the level correction amount $K_i$ by the following equation:

$$K_i = \{(PR_i + PO_i)/2\}/\{(PR_0 + PR_1 + \ldots + PR_{383} + PO_0 + PO_1 + \ldots + PO_{383})/(384 \times 2)\}$$

where i = 0 to 383. The level correction is then performed by calculating $PN_i/K_i$ (i = 0 to 383) where $PN_i$ is a carrier-dependent power value of the NULL symbol.

If C/N of a reception signal becomes very small, it becomes difficult to correctly determine a level correction amount from the OFDM symbol immediately before and/or after the NULL symbol. In this case, the TII detection operation by the carrier-dependent power detector 41, correction circuit 52, and TII decoder 42 may be stopped.

For example, a reception state detector is provided which compares the maximum correlation value of the correlation function calculated by the frequency error detector 33 with a predetermined threshold value, and if the former is lower than the latter, outputs a poor reception state detection signal. When the reception state detector outputs the poor reception state detection signal, the TII detection operation by the carrier-dependent power detector 41, correction circuit 52, and TII decoder 42 is stopped.

In the above embodiment and modifications DAB broadcasting in Europe is used. The invention is not limited only to the DAB broadcasting, but is also applicable to other broadcasting and communications such as digital ground wave TV broadcasting and digital satellite broadcasting.

According to the invention, a change in level, to be caused by the transmission path frequency characteristics, of carrier-dependent components of each carrier of the NULL symbol derived by the deriving means is corrected, and then the transmission carrier is judged from the level thereof to decode the transmitter identification information. Accordingly, even if some carriers are attenuated because the fading phenomenon or the like makes a dip on the frequency characteristics of the transmission path from a transmitter to a receiver or some carriers at edges of the reception signal band are attenuated while a reception signal passes through the front end, because of a variation in the characteristics of a band-limiting filter, the transmission carrier can be judged correctly and the transmitter identification information can be decoded correctly.

**Claims**

1.  A digital broadcast receiver including:

    reception means for receiving a digital broadcast signal of an OFDM modulated wave including transmitter identification information represented by transmission carriers combined in a NULL symbol in a start field of a transmission frame,
    deriving means for deriving carrier-components from an output of the reception means, and
    transmitter identification information detecting means for

    a) receiving the carrier-components of the NULL symbol derived by the deriving means,
    b) judging a transmitted carrier from a level of each carrier, and
    c) decoding the transmitter identification information in accordance with the judged transmitted carrier, and correcting means,

    CHARACTERIZED IN THAT
    said correcting means is provided in the transmitter identification information detecting means and is adapted to correct a level change, which is caused by transmission path frequency characteristics, in the carrier-components of the NULL symbol derived by the deriving means, wherein said correcting means corrects the level change with a level correction amount for each carrier of the NULL symbol determined by referring to levels (PRi) of carriers of a predetermined symbol (PRS) before or after the NULL symbol derived by the deriving means, and
    said transmitter identification information detecting means is adapted to

a) judge a transmitted carrier from a level of each carrier corrected by said correcting means, and

b) decode the transmitter identification information in accordance with the judged transmitted carrier.

**2.** A digital broadcast receiver according to claim 1, further comprising a poor reception state detecting means for detecting a poor reception state, wherein the transmitter identification information detecting means stops a detection operation of the transmitter identification information when said poor reception state detecting means detects a poor reception state.

**3.** A digital broadcast receiver according to claim 1 or 2, wherein said correction means includes correction amount determining means (51) for determining the level correction amount of each carrier of the NULL symbol by calculating a ratio of a level of each carrier and an average level of all carriers in the predetermined symbol.

**Patentansprüche**

**1.** Digitalrundfunkempfänger, beinhaltend:

eine Empfangseinrichtung zum Empfangen eines digitalen Rundfunksignals aus einer OFDM-modulierten Welle, welches Senderidentifikationsinformationen beinhaltet, die durch Sendeträger dargestellt sind, die in einem NULL-Symbol in einem Anfangsfeld eines Übertragungsrahmens kombiniert sind,
eine Ableitungseinrichtung zum Ableiten von Trägerkomponenten aus einem Ausgangssignal der Empfangseinrichtung, und
eine Senderidentifikationsinformationen-Detektionseinrichtung zum

a) Empfangen der von der Ableitungseinrichtung abgeleiteten Trägerkomponenten des NULL-Symbols,
b) Beurteilen eines gesendeten Trägers ausgehend von einem Pegel jedes Trägers, und
c) Decodieren der Senderidentifikationsinformationen in Übereinstimmung mit dem beurteilten gesendeten Träger, und eine Korrektureinrichtung,

**DADURCH GEKENNZEICHNET, DASS**
die Korrektureinrichtung in der Senderidentifikationsinformationen-Detektionseinrichtung vorgesehen ist und angepasst ist, um eine Pegelveränderung, die durch Übertragungswegfrequenzcharakteristiken verursacht wird, in den von der Ableitungseinrichtung abgeleiteten Trägerkomponenten des NULL-Symbols zu korrigieren, wobei die Korrektureinrichtung die Pegelveränderung mit einem Pegelkorrekturbetrag für jeden Träger des NULL-Symbols korrigiert, der bestimmt wird durch Bezugnehmen auf Pegel (PRi) von Trägem eines vorgegebenen Symbols (PRS) vor oder nach dem NULL-Symbol, die von der Ableitungseinrichtung abgeleitet sind, und
die Senderidentifikationsinformationen-Detektionseinrichtung angepasst ist, um

a) einen gesendeten Träger ausgehend von einem durch die Korrektureinrichtung korrigierten Pegel jedes Trägers zu beurteilen, und
b) die Senderidentifikationsinformationen in Übereinstimmung mit dem beurteilten gesendeten Träger zu decodieren.

**2.** Digitalrundfunkempfänger nach Anspruch 1, der weiterhin eine Einrichtung zur Detektion eines schlechten Empfangszustands umfasst, die einen schlechten Empfangszustand detektiert, wobei die Senderidentifikationsinformationen-Detektionseinrichtung einen Vorgang zur Detektion der Senderidentifikationsinformationen anhält, wenn die Einrichtung zur Detektion eines schlechten Empfangszustands einen schlechten Empfangszustand detektiert.

**3.** Digitalrundfunkempfänger nach Anspruch 1 oder 2, wobei die Korrektureinrichtung Korrekturbetragsbestimmungsmittel (51) beinhaltet, um den Pegelkorrekturbetrag für jeden Träger des NULL-Symbols zu bestimmen, indem ein Verhältnis eines Pegels jedes Trägers und eines durchschnittlichen Pegels aller Träger im vorgegebenen Symbol berechnet wird.

**Revendications**

**1.** Récepteur pour diffusion numérique comportant :

un moyen de réception destiné à recevoir un signal de diffusion numérique d'une onde modulée OFDM comportant des informations d'identification d'émetteur représenté par des porteuses d'émission combinées dans un symbole NUL dans un champ de départ d'une trame d'émission,

un moyen de dérivation destiné à dériver des composantes de porteuse à partir d'une sortie du moyen de réception ; et

un moyen de détection d'informations d'identification d'émetteur destiné à :

a) recevoir les composantes de porteuse du symbole NUL dérivées par le moyen de dérivation,

b) déterminer une porteuse émise à partir d'un niveau de chaque porteuse, et

c) décoder les informations d'identification d'émetteur conformément à la porteuse émise déterminée ; et

un moyen de rectification
**CARACTERISÉ EN CE QUE**
ledit moyen de rectification est prévu dans le moyen de détection d'informations d'identification d'émetteur et est conçu pour rectifier un changement de niveau, causé par des caractéristiques de fréquence de la voie d'émission, dans les composantes de porteuse du symbole NUL dérivées par le moyen de dérivation, ledit moyen de rectification rectifiant le changement de niveau à l'aide d'une quantité de rectification de niveau relative à chaque porteuse du symbole NUL déterminée en référence à des niveaux (PRi) de porteuses d'un symbole prédéterminé (PRS) précédant ou suivant le symbole NUL dérivés par le moyen de dérivation, et

ledit moyen de détection d'informations d'identification d'émetteur est conçu pour :

a) déterminer une porteuse émise à partir d'un niveau de chaque porteuse rectifiée par ledit moyen de rectification, et

b) décoder les informations d'identification d'émetteur conformément à la porteuse émise déterminée.

2. Récepteur pour diffusion numérique selon la revendication 1, comprenant en outre un moyen de détection d'état de mauvaise réception destiné à détecter un état de mauvaise réception, le moyen de détection d'informations d'identification d'émetteur interrompant une opération de détection des informations d'identification d'émetteur lorsque ledit moyen de détection d'état de mauvaise réception détecte un état de mauvaise réception.

3. Récepteur pour diffusion numérique selon la revendication 1 ou 2, dans lequel ledit moyen de rectification comporte un moyen de détermination de quantité de rectification (51) destiné à déterminer la quantité de rectification de niveau de chaque porteuse du symbole NUL en calculant un ratio entre un niveau de chaque porteuse et un niveau moyen de l'ensemble des porteuses du symbole prédéterminé.

# FIG. 1

# FIG. 2A

a0       a1       a2       a3       a4       a5       a6       a7

CARRIER NUMBER

0   8  9    56 57   104 105  152 153  200 201  248 249  296 297  344 345

# FIG. 2B

a0       a1       a2       a3       a4       a5       a6       a7

CARRIER NUMBER

0   8  9    56 57   104 105  152 153  200 201  248 249  296 297  344 345

EP 0 944 193 B1

# FIG. 3

CARRIER NUMBER

0 1 2 3   296 297 298   383

EP 0 944 193 B1

## FIG. 4

ONE TRANSMISSION FRAME (TRANSMISSION MODE 2)

| | Sync | | FIC | | | | | MSC | | | |
|---|---|---|---|---|---|---|---|---|---|---|---|
| NULL (TII) | S=1 | 2 | 3 | 4 | 5 | | | | 75 | | 76 |

24ms

0.32425ms NULL

0.3115ms PRS

0.0615ms GUARD INTERVAL

0.25ms EFFECTIVE SYMBOL PERIOD

OFDM SYMBOL

a  OUTPUT a OF ENVELOPE DETECTOR

b  SHAPED WAVEFORM OF a

c  NULL SYMBOL DETECTION SIGNAL ND

Td

d  TRANSMISSION MODE DETECTION SIGNAL TM

TM=2

# FIG. 5

ONE DAB BROADCAST: AREA SA

*FIG. 6A*

a0 =0  a1 =1  a2 =0  a3 =0  a4 =1  a5 =0  a6 =1  a7 =1

CARRIER NUMBER

0   8   9   56   57   104   105   152   153   200   201   248   249   296   297   344   345

2c=8   48

*FIG. 6B*

a0 =0  a1 =1  a2 =0  a3 =0  a4 =1  a5 =0  a6 =0  a7 =1

CARRIER NUMBER

0   8   9   56   57   104   105   152   153   200   201   248   249   296   297   344   345

EP 0 944 193 B1

# FIG. 7